(19) Europäisches Patentamt
European Patent Office
Office européen des brevets

(11) Veröffentlichungsnummer: **0 206 979**
**B1**

(12) **EUROPÄISCHE PATENTSCHRIFT**

(45) Veröffentlichungstag der Patentschrift: **06.12.89**

(51) Int. Cl.⁴: **C 07 C 149/24**, C 07 C 149/273, C 07 C 149/30, C 08 K 5/37

(21) Anmeldenummer: **86810185.8**

(22) Anmeldetag: **23.04.86**

# (54) Bis(substituiertes Thioalkyl)hydroxylamine sowie stabilisierte polyolefinzusammensetzungen.

(30) Priorität: **29.04.85 US 728364**

(43) Veröffentlichungstag der Anmeldung: **30.12.86 Patentblatt 86/52**

(45) Bekanntmachung des Hinweises auf die Patenterteilung: **06.12.89 Patentblatt 89/49**

(84) Benannte Vertragsstaaten: **DE FR GB IT NL**

(56) Entgegenhaltungen: **CHEMICAL AND PHARMACEUTICAL BULLETIN, Band 27, Nr. 7, 1979, Seiten 1691-1694, Pharmaceutical Society of Japan, Tokyo, JP; K. ITO et al.: Preparation of N-alkylthiomethyl derivatives of hydroxylamines"**

(73) Patentinhaber: **CIBA- GEIGY AG, Klybeckstrasse 141, CH- 4002 Basel (CH)**

(72) Erfinder: **Ravichandran, Ramanathan, 111 De Haven Drive, Apt. 125, Yonkers, N.Y. 10703 (US)**
Erfinder: **Spivack, John D., 1 Blue Jay Street, Spring Valley New York 10977 (US)**

EP 0 206 979 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft Polyolefinzusammensetzungen mit einem oder mehreren aus der Gruppe der Phenolälterungsschutzmittel, der Lichtstabilisatoren auf Basis sterisch gehinderter Amine, der Lichtstabilisatoren auf Basis alkylierter Hydroxybenzoate, der UltraviolettLichtschutzmittel, der organischen Phosphorverbindungen, der Alkalimetallsalze von Fettsäuren und der Thiosynergisten ausgewählten Stabilisierungsmitteln, wobei die Zusammensetzungen gegen Abbau und/oder Verfärbung durch eine wirksame Menge an Bis(substituiertes Thioalkyl)hydroxylaminderivat stabilisiert sind.

Die vorliegende Erfindung betrifft weiter neue Bis(sterisch gehindertes Phenolthioalkyl)hydroxylamine.

Zwar sind Phenolalterungsschutzmittel schon lange bekannt als hochwirksame Stabilisierungsmittel für Polyolefine und haben auch weit verbreitete Verwendung dafür gefunden, die damit geschützten Polyolefinzusammensetzungen neigen jedoch zur Verfärbung bei Erhitzung auf erhöhte Temperaturen über längeren Zeitraum oder bei Einwirkung von Erdgasverbrennungsprodukten.

Trotz der Tatsache, daß die Mitverwendung von organischen Phosphiten bei solchen Polyolefinzusammensetzungen die Verfärbung verringert, handelt es sich dabei weiterhin um ein gravierendes Problem für die Praxis.

Auch Polyolefinzusammensetzungen, die gewisse Phenolalterungsschutzmittel sowie Lichtstabilisatoren auf Basis sterisch gehinderter Amine enthalten, neigen bereits bei Lagerung über einen längeren Zeitraum bei Umgebungstemperatur zur Verfärbung.

Die organischen Hydroxylaminverbindungen, wie z. B. N,N-Dibenzylhydroxylamin, sind allgemein bekannt und zum Teil auch im Handel.

In den US-Patentschriften Nr. 3 644 278 und 3 778 464 wird die Verwendung von substituierten Hydroxylaminen verschiedenartiger Struktur als Alterungsschutzmittel für Kohlenwasserstoffe einschließlich Polyolefine beschrieben. Dabei wird die Verwendung solcher substituierter Hydroxylamine in Verbindung mit einem Phenolalterungsschutzmittel oder in Verbindung mit einer organischen Phosphorverbindung, einem Ultraviolett-Lichtschutzmittel, einem Thiosynergisten oder einem Lichtstabilisator auf Basis sterisch gehinderter Amine in Polyolefinen und die erhaltene Widerstandsfähigkeit gegen Abbau und/oder Verfärbung weder erwähnt noch nahegelegt.

Aus US-Patent Nr. 3 408 422 ist der Einsatz von ausgewählten Hydroxylaminderivaten in ungesättigten Polyestermassen zur Verhinderung von vorzeitiger Lagergelierung bekannt.

In US-Patent Nr. 3 926 909 wird die Verwendung von substituierten Hydroxylaminen als Stabilisierungsmittel gegen die Verfärbung von Polyurethanen (Spandex) durch Licht-, Smog- oder Rauchgaseinwirkung gelehrt.

US-Patent Nr. 4 242 224 offenbart, die rosarote Verfärbung, die bei hohen pH-Werten bei den in der Latexindustrie verwendeten Alterungs- und Ozonschutsmittelemulsionen vom Amintyp auftritt, durch den Einsatz von Dialkylhydroxylamin- oder Mercaptanstabilisierungsmitteln zu verhindern oder zu verlangsamen.

US-Patent Nr. 4 316 996 betrifft ein Verfahren zur Herstellung von Phenolalterungsschutzmitteln in Gegenwart eines Hydroxylaminderivats und eines substituierten Oxims zu einem Phenolalterungsschutzmittel, das schon selbst verbesserte Farbqualität und Farbechtheit zeigt. Der Einsatz solcher Alterungsschutzmittel in Kautschuk soll das Ausmass und die Geschwindigkeit der Verfärbung reduzieren. Die vorliegenden Zusammensetzungen werden weder erwähnt noch nahegelegt.

Die US-Patentschrift Nr. 3 432 578 bezieht sich auf Zusammensetzungen aus konjugierten Dienpolymeren, die gegen die negativen Einflüsse des ultravioletten Lichts durch Einsatz von Diaryl- oder Diaralkylhydroxylaminverbindungen einschließlich N,N-Dibenzylhydroxylamin stabilisiert sind. Es ist angegeben, daß die Dialkylhydroxylamine überhaupt keine Wirksamkeit als Stabilisierungsmittel für solche Polymerzusammensetzungen aufweisen. Auch soll es möglich sein, andere Stabilisierungsmittel in Verbindung mit den Hydroxylaminderivaten zu verwenden, wobei aus Tabelle I stabilisierte Zusammensetzungen ersichtlich sind, die aus einem konjugierten Dienpolymeren, Phenolalterungsschutzmitteln und N,N-Dibenzylhydroxylamin bestehen. Derartige Zusammensetzungen wären widerstandsfähig gegen Abbau durch UV-Lichteinwirkung.

Aus US-Patent 4 386 224 ist die Verwendung von N,N-Diäthylhydroxylamin als Farbstabilisator für Monoalkylphenole wie Nonyl- oder Dodecylphenol bekannt.

Bis(substituiertes Thioalkyl)hydroxylamine sind zum Teil an sich bekannte Verbindungen. Von K. Ito u.a., Chem. Pharm. Bull., 27, 1691 (1979) wird die Kondensation nach Mannich von ausgewählten Mercaptanen, Formaldehyd und Hydroxylamin zu von Propylmercaptan, Amylmercaptan, Cyclohexylmercaptan, Benzylmercaptan, Thiophenol oder Äthylendimercaptan abgeleiteten Verbindungen beschrieben. Auch verwandte, von N-Methylhydroxylamin, N-Benzylhydroxylamin und N-Phenylhydroxylamin abgeleitete Verbindungen werden beschrieben.

Die Möglichkeit, solche Verbindungen als Stabilisierungsmittel für Polyolefine oder andere Substrate zu verwenden, wird von den Autoren, die an eventuellen pharmazeutischen Anwendungen der genannten Verbindungen interessiert waren, weder beschrieben noch nahegelegt. Die von Thiohydrochinon oder Benzylmercaptan abgeleiteten sterisch gehinderten Phenolthioalkylhydroxylamine sind weder beschrieben noch nahegelegt.

G. Rawson u.a., Tetrahedron, *26*, 5653 (1970) beschreiben die Herstellung von N,N-(Di-p-tolylthiomethyl)-hydroxylamin und von N,N'-(Di-p-bromphenylthiomethyl)-hydroxylamin im Rahmen einer akademischen Untersuchung. Zur Verwendung der vorerwähnten Verbindungen in der Praxis finden sich keine Angaben.

Eine erste Aufgabe der vorliegenden Erfindung ist es, neue Bis(sterisch gehindertes Phenolthioalkyl)hydroxylamine zu schaffen, die wirksame Stabilisierungsmittel für Polyolefine und andere Substrate sind, die dem oxydativen, hitze- oder lichtbedingten Abbau ausgesetzt sind.

Ziel der vorliegenden Erfindung ist es allgemein, eine gegen Abbau stabilisierte Polyolefin- oder sonstwie polymere Zusammensetzung zu schaffen, welche ein oder mehrere aus der Gruppe der Phenolalterungsschutzmittel, der Lichtstabilisatoren auf Basis sterisch gehinderter Amine, der Lichtstabilisatoren auf Basis alkylierter Hydroxybenzoate, der Ultraviolett-Lichtschutzmittel, der organischen Phosphorverbindungen und der Thiosynergisten ausgewählte Stabilisierungsmittel sowie zusätzlich ein Hydroxylaminderivat enthalten.

Aufgabe der vorliegenden Erfindung ist es auch, eine stabilisierte Polyolefinzusammensetzung zu schaffen, die ein Phenolalterungsschutzmittel enthält und gegen Verfärbung durch Hitzeeinwirkung sowie gegen Erdgasverbrennungsprodukte durch den Miteinsatz eines Hydroxylaminderivats stabilisiert ist.

Weiterhin ist es Aufgabe der vorliegenden Erfindung, eine stabilisierte Polyolefinzusammensetzung zu schaffen, die ein Alkalimetallsalz einer Fettsäure bzw. das genannte Metallsalz und ein Phenolalterungsschutzmittel enthält und gegen Verfärbung durch Hitzeeinwirkung oder durch die Einwirkung von Erdgasverbrennungsprodukten durch den Miteinsatz eines Hydroxylaminderivats stabilisiert ist.

Gegenstand der vorliegenden Erfindung sind Verbindungen der Formel I

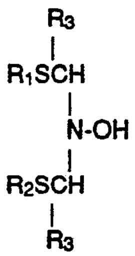

(I)

worin $R_1$ und $R_2$ unabhängig voneinander je Alkyl mit 8 bis 18 Kohlenstoffatomen oder je eine Gruppe

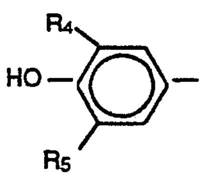

oder

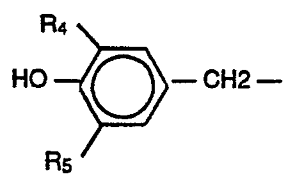

bedeuten, $R_4$ und $R_5$ unabhängig voneinander Alkyl mit 1 bis 18 Kohlenstoffatomen, Cycloalkyl mit 5 bis 6 Kohlenstoffatomen, Phenyl, Alkaryl mit 7 bis 18 Kohlenstoffatomen oder Aralkyl mit 7 bis 9 Kohlenstoffatomen darstellen, und $R_3$ für Wasserstoff oder Alkyl mit 1 bis 12 Kohlenstoffatomen steht.

Vorzugsweise haben $R_1$ und $R_2$ jeweils die gleiche Bedeutung; $R_3$ steht vorzugsweise für Wasserstoff.

Vorzugsweise haben $R_1$ und $R_2$ jeweils die gleichen Bedeutungen und sind Alkyl mit 12 bis 18 Kohlenstoffatomen, und $R_3$ steht für Wasserstoff oder Alkyl mit 1 bis 4 Kohlenstoffatomen, insbesondere für n-Propyl.

Als Alkyl mit 8 bis 18 Kohlenstoffatomen ist $R_1$ oder $R_2$ zum Beispiel n-Octyl, tert.-Octyl, n-Decyl, n-Tri-decyl, n-Tetradecyl, n-Hexadecyl oder n-Octadecyl.

Vorzugsweise haben $R_1$ und $R_2$ jeweils die gleiche Bedeutung und sind n-Dodecyl, n-Tridecyl oder n-Octadecyl.

Als Alkyl mit 1 bis 12 Kohlenstoffatomen steht $R_3$ zum Beispiel für Methyl, Äthyl, Isopropyl, n-Propyl, n-Butyl, tert.-Butyl, tert.-Amyl, n-Hexyl, tert.-Octyl, n-Decyl oder n-Dodecyl, und vorzugsweise ist $R_3$ Alkyl mit 1 bis 4 Kohlenstoffatomen, wie zum Beispiel Methyl, Äthyl, n-Propyl oder n-Butyl.

Vorzugsweise haben $R_4$ und $R_5$ die gleiche Bedeutung und sind verzweigtes Alkyl mit 4 bis 8 Kohlenstoffatomen, insbesondere tert.-Butyl.

Als Alkyl mit 1 bis 18 Kohlenstoffatomen ist $R_4$ oder $R_5$ zum Beispiel Methyl, Äthyl, Isopropyl, n-Butyl, tert.-Butyl, tert.-Amyl, n-Hexyl, tert.-Octyl, n-Decyl, tert.-Dodecyl, n-Hexadecyl oder n-Octadecyl.

$R_4$ der $R_5$ kann auch für Cycloalkyl mit 5 bis 6 Kohlenstoffatomen stehen, wie zum Beispiel Cyclopentyl oder Cyclohexyl.

$R_4$ der $R_5$ kann auch Aralkyl mit 7 bis 9 Kohlenstoffatomen bedeuten, wie zum Beispiel Benzyl, alpha-Methylbenzyl oder alpha,alpha-Dimethylbenzyl.

Als Alkaryl mit 7 bis 18 Kohlenstoffatomen kann $R_4$ oder $R_5$ zum Beispiel durch Alkyl mit 1 bis 12 Kohlenstoffatomen substituiertes Phenyl sein.

Die Verbindungen der Formel I können mittels der Mannich-Reaktion aus dem entsprechend substituierten Thiohydrochinon oder Benzylmercaptan, Aldehyd und Hydroxylaminhydrohalogenid hergestellt werden.

Diese Zwischenprodukte sind weitgehend im Handel befindlich oder können auf bekannte Weise hergestellt werden.

Gegenstand dieser Erfindung sind auch gegen Abbau stabilisierte Zusammensetzungen, bestehend aus

(a) einem dem oxydativen, hitze- oder lichtbedingten Abbau unterliegenden Material,
(b) einer stabilisierenden Menge einer Verbindung der Formel A

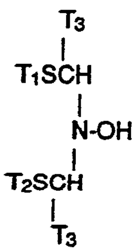

(A)

worin $T_1$ und $T_2$ unabhängig voneinander Alkyl mit 1 bis 18 Kohlenstoffatomen, Cycloalkyl mit 5 bis 6 Kohlenstoffatomen, Phenyl, Alkaryl mit 7 bis 18 Kohlenstoffatomen, Aralkyl mit 7 bis 9 Kohlenstoffatomen oder

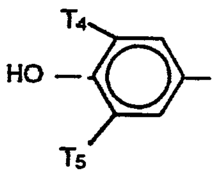 oder 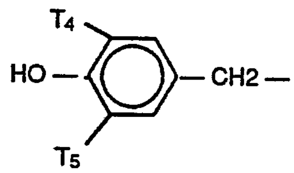

bedeuten, in denen $T_4$ und $T_5$ unabhängig voneinander Alkyl mit 1 bis 18 Kohlenstoffatomen, Cycloalkyl mit 5 bis 6 Kohlenstoffatomen, Phenyl, Alkaryl mit 7 bis 18 Kohlenstoffatomen oder Aralkyl mit 7 bis 9 Kohlenstoffatomen bedeuten; oder $T_1$ und $T_2$ bilden zusammen Alkylen mit 2 bis 3 Kohlenstoffatomen; und $T_3$ steht für Wasserstoff oder Alkyl mit 1 bis 12 Kohlenstoffatomen.

Vorzugsweise haben $T_1$ und $T_2$ jeweils die gleiche Bedeutung, und vorzugsweise steht $T_3$ für Wasserstoff.

Vorzugsweise haben $T_1$ und $T_2$ jeweils die gleiche Bedeutung und stehen für Alkyl mit 12 bis 18 Kohlenstoffatomen oder

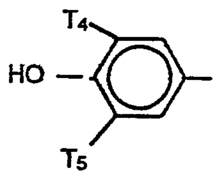 oder 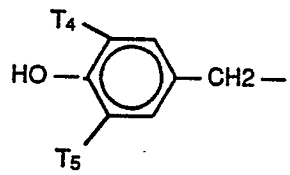

worin $T_4$ und $T_5$ jeweils die gleichen Bedeutungen haben und für verzweigtkettiges Alkyl mit 4 bis 8 Kohlenstoffatomen, vorzugsweise tert.-Butyl, stehen.

Die Bedeutungen von $T_1$ bis $T_5$ entsprechen weitgehend den oben für $R_1$ bis $R_5$ genannten. Als Alkyl mit über 12 Kohlenstoffatomen sind $T_1$ oder $T_2$ zum Beispiel n-Tetradecyl, n-Hexadecyl oder n-Octadecyl.

$T_1$ und $T_2$ zusammen als Alkylen mit 2 bis 3 Kohlenstoffatomen sind Äthylen, Trimethylen oder Methyläthylen.

Die Verbindungen der Formel A werden unter Verwendung von weitgehend handelsüblichen Zwischenprodukten nach der gleichen allgemeinen Methode wie die der Formel I hergestellt.

Die bevorzugten Zusammensetzungen sind solche, in denen es sich bei dem Hydroxylamin der Formel A um N,N-Bis-[(3,5-di-tert.-butyl-4-hydroxyphenyl)thiomethyl]hydroxylamin, N,N-Bis[(3,5-di-tert.-butyl-4-hydroxybenzyl)thiomethyl]-hydroxylamin, N,N-Bis[(3-methyl-5-tert.-butyl-4-hydroxyphenyl)thiomethyl]hydroxylamin oder N,N-bis(n-dodecy thiomethyl)hydroxylamin handelt.

Die Verbindungen der Formel A sind ein wirksames Stabilisierungsmittel bei einer Vielzahl von organischen Substraten einsetzbar. Damit stabilisierbare Polymere umfassen:

1. Von Mono- oder Diolefinen abgeleitete Polymere, zum Beispiel Polyäthylen, das gegebenenfalls vernetzt sein kann, Polypropylen, Polyisobutylen, Polymethylbuten-1, Polymethylpenten-1, Polyisopren, Polybutadien.
2. Mischungen aus den unter 1) aufgeführten Homopolymeren, zum Beispiel Mischungen aus Polypropylen und Polyäthylen, Polypropylen und Polybuten-1, Polypropylen und Polyisobutylen.
3. Copolymere aus den unter 1) genannten Homopolymeren zugrundeliegenden Monomeren, zum Beispiel Äthylen/PropylenCopolymere, Propylen/Buten-1-Copolymere, Propylen/Isobutylen-Copolymere, Äthylen/Buten-1-Copolymere sowie Terpolymere aus Äthylen und Propylen mit einem Dien, zum Beispiel Hexadien, Dicyclopentadien oder Äthylidennorbornen, und Copolymere aus α-Olefinen, zum Beispiel Äthylen mit Acryl- oder Methacrylsäure.
4. Polystyrol.
5. Copolymere aus Styrol und aus α-Methylstyrol, zum Beispiel Styrol/Butadien-Copolymere, Styrol/Acrylnitril-Copolymere, Styrol/Acrylnitril/Methacrylat-Copolymere, Styrol/Acrylnitril-Copolymere, die mit Acrylesterpolymeren zu Verbesserung der Schlagfestigkeit modifiziert sind, sowie Blockcopolymere, zum Beispiel Styrol/Butadien/Styrol-Blockcopolymere.
6. Pfropfcopolymere aus Styrol, zum Beispiel das Propfpolymere aus Styrol auf Polybutadien, das Pfropfpolymere aus Styrol mit Acrylnitril auf Polybutadien sowie deren Gemische mit den unter 5) aufgeführten Copolymeren, die man

allgemein als Acrylnitril/Butadien/Styrol- oder als ABSKunststoffe bezeichnet.

7. Halogenhaltige Vinylpolymere, zum Beispiel Polyvinylchlorid, Polyvinylidenchlorid, Polyvinylfluorid, Polychloropren, Chlorkautschuke, Vinylchlorid/Vinylidenchlorid-Copolymere, Vinylchlorid/Vinylacetat-Copolymere, Vinylidenchlorid/Vinylacetat-Copolymere.
8. Polymere, die von α,β-ungesättigten Säuren und deren Derivaten abgeleitet sind, wie Polyacrylate und Polymethacrylate, Polyacrylamide und Polyacrylnitril.
9. Polymere, die von ungesättigten Alkoholen und Aminen und von deren Acylderivaten oder Acetalen abgeleitet sind, zum Beispiel Polyvinylalkohol, Polyvinylacetat, Polyvinylstearat, Polyvinylbenzoat, Polyvinylmaleinat, Polyvinylbutyral, Polyallylphthalat, Polyallylmelamin und deren Copolymere mit anderen Vinylverbindungen, zum Beispiel Äthylen/Vinylacetat-Copolymere.
10. Homopolymere und Copolymere, die von Epoxyden abgeleitet sind, zum Beispiel Polyäthylenoxyd oder die von Bisglycidyläthern abgeleiteten Polymere.
11. Polyacetale, zum Beispiel Polyoxymethylen, sowie Polyoxymethylene mit einkondensiertem Äthylenoxyd.
12. Polyalkylenoxyde, zum Beispiel Polyoxyäthylen, Polypropylenoxyd oder Polybutylenoxyd.
13. Polyphenylenoxyde.
14. Polyurethane und Polyharnstoffe, wie in Urethanbeschichtungen.
15. Polycarbonate.
16. Polysulfone.
17. Polyamide und Copolyamide, die von Diaminen und Dicarbonsäuren und/oder von Aminocarbonsäuren oder den entsprechenden Lactamen abgeleitet sind, zum Beispiel Polyamid 6, Polyamid 6/6, Polyamid 6/10, Polyamid 11, Polyamid 12, Poly-m-phenylenisophthalamid.
18. Polyester, die von Dicarbonsäuren und Dialkoholen und/oder von Hydroxycarbonsäuren oder den entsprechenden Lactonen abgeleitet sind, zum Beispiel Polyäthylenglykolterephthalat, Poly-1,4-dimethylolcyclohexanterephthalat.
19. Vernetzte Polymere, die einerseits von Aldehyden und andererseits von Phenolen, Harnstoffen und Melamin abstammen, zum Beispiel Phenol/Formaldehyd-, Harnstoff/Formaldehyd- und Melamin/Formaldehyd-Harze.
20. Alkydharze, zum Beispiel Glycerin/Phthalsäure-Harze und deren Gemische mit Melamin/Formaldehyd-Harzen.
21. Ungesättigte Polyesterharze, die von Copolyestern aus gesättigten und ungesättigten Dicarbonsäuren mit mehrwertigen Alkoholen sowie von Vinylverbindungen als Vernetzungsmittel abgeleitet sind, einschliesslich deren halogenhaltigen, flammwidrigen Abwandlungen.
22. Natürliche Polymere, zum Beispiel Cellulose, Kautschuk sowie deren chemisch abgeänderte Homologderivate, zum Beispiel Celluloseacetate, Cellulosepropionate und Cellulosebutyrate und die Celluloseäther, zum Beispiel Methylcellulose.

Die Stabilisierung der Polyolefine, Styrolpolymere und Polyamide und der Polyurethane hat besondere Bedeutung, wobei die vorliegenden Copolymere dafür hervorragend geeignet sind. Beispiele für solche Polymere sind Polyäthylen hoher und niedriger Dichte, Polypropylen, Äthylen/PropylenCopolymere, Polystyrol, Styrol/Butadien/Acrylnitril-Terpolymere, Gemische der Polyolefine oder der Styrolpolymere, sowie auf Polyäther- oder Polyesterbasis aufgebaute Polyurethane, und zwar in der Form von Lacken, Filamenten, Filmen, Folien, Elastomeren oder Schaumstoffen.

Die vorliegenden Verbindungen der Formel A sind besonders wirksam bei der Stabilisierung von oxydativem, hitze- oder lichtbedingtem Abbau unterliegendem Material, das aus der Gruppe Acrylnitril-Butadien-Styrol(ABS)-Harze, schlagfestes Polystyrol, Polyphenylenoxyd, Polybutadien, Polyisopren, Naturkautschuk und Schmieröle ausgewählt ist.

Die vorliegenden Stabilisierungsmittel werden dem Kunststoff oder Öl in einer Menge von 0,05 bis 5 Gew.-%, bezogen auf das zu stabilisierende Material, zugesetzt. Vorzugsweise werden 0,1 bis 2,5 Gew.-% Stabilisierungsmittel, bezogen auf das zu stabilisierende Material, in dieses eingebaut.

Der Einbau kann nach der Polymerisation, zum Beispiel durch Einmischung der Verbindungen und gegebenenfalls weiteren Zusatzmitteln in die Schmelze nach den üblichen Verfahren der Technik, vor oder während Verformung oder durch Auftrag der Verbindungen als Lösung oder Dispersion auf den Polymeren gegebenenfalls mit anschliessender Verdampfung des Lösungsmittels erfolgen.

Die Stabilisierungsmittel können dem zu stabilisierenden Kunststoff auch in Form eines diese Verbindungen zum Beispiel in einer Konzentration von 2,5 bis 25 Gew.-% enthaltenden Masterbatches zugesetzt werden.

Obwohl die erfindungsgemässen Verbindungen zur Ausübung einer lichtstabilisierenden Funktion verwendet werden können, werden sie häufig zusammen mit anderen Stabilisierungsmitteln, auch anderen Lichtstabilisatoren, bei der Herstellung von stabilisierten Zusammensetzungen verwendet. Die Stabilisierungsmittel können zusammen mit Phenolalterungsschutzmitteln, Pigmenten, Farbmitteln oder -stoffen, Lichtstabilisatoren wie sterisch gehinderten Aminen, Metalldesaktivatoren, usw. verwendet werden.

Die Stabilisierungsmittel der Formel A können ohne weiteres in die organischen Polymere nach herkömmlichen Verfahren zu jedem zweckmäßigen Zeitpunkt vor der Herstellung von Formteilen daraus eingesetzt werden. So kann das Stabilisierungsmittel zum Beispiel mit dem Polymer als Trokkenpulver gemischt werden, oder aber eine Suspension oder Emulsion des Stabilisierungsmittels kann mit einer Lösung, Suspension oder Emulsion des Polymers gemischt werden. Die stabilisierten Polymerzusammensetzungen gemäß der Erfindung können gegebenenfalls auch etwa 0,05 bis etwa 5, insbesondere etwa 0,1 bis etwa 2,5, Gew.-% verschiedener üblicher Zusatzmittel wie die nachfolgenden enthalten, insbesondere Phenolalterungsschutzmittel oder Lichtstabilisatoren oder deren Gemische:

**1. Alterungsschutzmittel**

**1.1 Einfache 2,6-Dialkylphenole**, wie zum Beispiel 2,6-Di-tert.-butyl-4-methylphenol, 2-tert.-Butyl-4,6-dimethylphenol, 2,6-Di-tert.-butyl-4-methoxymethylphenol und 2,6-Di-octadecyl-4-methylphenol.

**1.2 Derivate von alkylierten Hydrochinonen**, wie zum Beispiel 2,5-Di-tert.-butyl-hydrochinon, 2,5-Di-tert.-amylhydrochinon, 2,6-Di-tert.-butyl-hydrochinon, 2,5-Di-tert.butyl-4-hydroxyanisol, 3,5-Di-tert.-butyl-4-hydroxyanisol, Stearinsäure-3,5-di-tert.-butyl-4-hydroxyphenylester und Adipinsäure-bis-(3,5-di-tert.-butyl-4-hydroxyphenyl)-ester.

**1.3 Hydroxylierte Thiodiphenyläther**, wie zum Beispiel 2,2'-Thio-bis-(6-tert.-butyl-4-methylphenol), 2,2'-Thio-bis-(4-octylphenol), 4,4'-Thio-bis-(tert.-butyl-3-methylphenol), 4,4'-Thio-bis-(3,6-di-sek.-amylphenol), 4,4'-Thio-bis-(6-tert.-butyl-2-methylphenol) und 4,4'-Bis-(2,6-dimethyl-4-hydroxyphenyl)-disulfid.

**1.4 Alkylidenbisphenole**, wie zum Beispiel 2,2'-Methylen-bis-(6-tert.-butyl-4-methylphenol), 2,2'-Methylen-bis-(6-tert.-butyl-4-äthylphenol), 4,4'-Methylen-bis-(6-tert.-butyl-2-methylphenol), 4,4'-Methylen-bis-(2,6-di-tert.-butylphenol), 2,6-Di-(3-tert.-butyl-5-methyl-2-hydroxy-benzyl)-4-methylphenol, 2,2 -Methylen-bis-[4-methyl-6-(?-methylcyclohexyl)-phenol], 1,1-Bis(3,5-dimethyl-2-hydroxyphenyl)-butan, 1,1-Bis-(5-tert.-butyl-4-hydroxy-2-methylphenyl)-butan, 2,2-Bis-(3,5-di-tert.-butyl-4-hydroxy-phenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecyl-mercaptobutan, 1,1,5,5-Tetra-(5-tert.-butyl-4-hydroxy-2-methylphenyl)-pentan und Äthylenglykolbis-[3,3-bis-(3-tert.-butyl-4-hydroxyphenyl)-butyrat].

**1.5 O,- N- und S-Benzylverbindungen**, wie zum Beispiel 3,5,3',5'-Tetra-tert.-butyl-4,4'-dihydroxydibenzyläther, 4-Hydroxy-3,5-dimethylbenzylmercaptoessigsäureoctadecylester, Tris-(3,5-di-tert.-butyl-4-hydroxybenzyl)-amin und Dithiotephthalsäurebis-(4-tert.-butyl-3-hydroxy-2,6-dimethylbenzyl)-ester.

**1.6 Hydroxybenzylierte Malonsäureester**, wie zum Beispiel 2,2-Bis-(3,5-di-tert.-butyl-2-hydroxybenzyl)-malonsäuredioctadecylester, 2-(3-tert.-Butyl-4-hydroxy-5-Methylbenzyl)-malonsäuredioctadecylester, Äthyl-2,2-bis-(3,5-di-tert.-butyl-4-hydroxybenzyl)malonsäuredidodecylmercaptoester und 2,2-Bis-(3,5-di-tert.-butyl-4-hydroxybenzyl)malonsäuredi-[4-(1,1,3,3-tetramethylbutyl)-phenyl]-ester.

**1. Hydroxybenzylaromatische Verbindungen**, wie zum Beispiel 1,3,5-Tri-(3,5-di-tert.-butyl-4-hydroxybenzyl)-2,4,6-trimethylbenzol, 1,4-Di-(3,5-di-tert.-butyl-4-hydroxybenzyl)-2,3,5,6-tetramethylbenzol und 2,4,6-Tri-(3,5-di-tert.-butyl-4-hydroxybenzyl)-phenol.

**1.8 s-Triazinverbindungen**, wie zum Beispiel 2,4-Bis-octylmercapto-6-(3,5-di-tert.-butyl-4-hydroxyanilino)-s-triazin, 2-Octylmercapto-4,6-bis-(3,5-di-tert.-butyl-4-hydroxyanilino)-s-triazin, 2-Octylmercapto-4,6-bis-(3,5-di-tert.-butyl-4-hydroxyphenoxy)-s-triazin, 2,4,6-Tris-(3,5-di-tert.-butyl-4-hydroxyphenoxy)-s-triazin, 2,4,6-Tris-(3,5-di-tert.-butyl-4-hydroxyphenyläthyl)-s-triazin und 1,3,5-Tris-(3,5-di-tert.-butyl-4-hydroxybenzyl)-isocyanurat.

**1.9 Amide der β-(3,5-Di-tert.-butyl-4 hydroxyphenyl)-propionsäuren**, wie zum Beispiel 1,3,5-Tris-(3,5-di-tert.-butyl-4-hydroxyphenylpropionyl)-hexahydro-s-triazin und N,N'-Di-(3,5-di-tert.-butyl-4-hydroxyphenylpropionyl)-hexamethylendiamin, N,N'-Bis-β-(3,5-di-t-butyl-4-hydroxyphenyl)-propionylhydrazin.

**1.10 Ester der β-(3,5-Di-tert.-butyl-4-hydroxyphenyl)-propionsäure** mit ein- oder mehrwertigen Alkoholen, wie zum Beispiel mit Methanol, Äthanol, Octadecanol, 1,6-Hexandiol; 1,9-Nonandiol, Äthylenglykol, 1,2-Propandiol, Diäthylenglykol, Thiodiäthylenglykol, Neopentylglykol, Pentaerythrit, 3-Thiaundecanol, 3-Thiapentadecanol, Trimethylhexandiol, Trimethyloläthan, Trimethylolpropan, Trishydroxyäthylisocyanurat und 4-Hydroxymethyl-1-phospha-2,6,7-trioxabicyclo[2.2.2]octan.

**1.11 Ester der β-(5-tert.-butyl-4-hydroxy-3-methylphenyl)-propionsäure** mit ein- oder mehrwertigen Alkoholen, wie zum Beispiel mit Methanol, Äthanol, Octadecanol, 1,6-Hexandiol, 1,9-Nonandiol, Äthylenglykol, 1,2-Propandiol, Diäthylenglykol, Thiodiäthylenglykol, Neopentylglykol, Pentaerythrit, 3-Thiaundecanol, 3-Thiapentadecanol, Trimethylhexandiol, Trimethyloläthan, Trimethylolpropan, Trishydroxyäthylisocyanurat und 4-Hydroxymethyl-1-phospha-2,6,7-trioxabicyclo[2.2.2]octan.

**1.12 Ester der 3,5-Di-tert.-butyl-4-hydroxyphenylessigsäure** mit ein- oder mehrwertigen Alkoholen, wie zum Beispiel mit Methanol, Äthanol, Octadecanol, 1,6-Hexandiol, 1,9-Nonandiol, Äthylenglykol, 1,2-Propendiol, Diäthylenglykol, Thiodiäthylenglykol, Neopentylglykol, Pentaerythrit, 3-Thiaundecanol, 3-Thiapentadecanol, Trimethylhexandiol, Tri-methyloläthan, Trimethylolpropan, Trishydroxyäthylisocyanurat und 4-Hydroxymethyl-1-phospha-2,6,7-trioxabicyclo[2.2.2]-octan, insbesondere der Tetrakisester des Pentaerythrits.

**1.13 Benzylphosphonsäureester**, wie zum Beispiel 3,5-Di-tert.-butyl-4-hydroxybenzylphosphonsäuredimethylester, 3,5-Di-tert.-butyl-4-hydroxybenzylphosphonsäurediäthylester, 3,5-Di-tert.-butyl-4-hydroxybenzylphosphonsäuredioctadecylester und 5-tert.-Butyl-4-hydroxy-3-methylbenzylphosphonsäuredioctadecylester.

**2. Lichtstabilisatoren**

**2.1 Ester gegebenenfalls substituierter Benzoesäuren**, z. B. 3,5-Di-tert.-butyl-4-hydroxybenzoesäure-2,4-di-tert.-butylphenylester oder -octadecylester oder -2-methyl-4,6-di-tert.-butylphenylester.

**2.2 Sterisch gehinderte Amine**, z. B. 4-Benzoyl-2,2,6,6-tetramethylpiperidin, 4-Stearyloxy-2,2,6,6-tetramethylpiperidin, Sebacinsäurebis-(2,2,6,6-tetramethylpiperidyl)-ester, Sebacinsäurebis-(1,2,2,6,6-pentamethylpiperidyl)-ester, 2-n-Butyl-2-(2-hydroxy-3,5-di-tert.-butylbenzyl)-malonsäurebis(1,2,2,6,6-pentamethylpiperidyl)-ester oder 3-n-Octyl-7,7,9,9-tetramethyl-1,3,8-triazaspiro[4.5]decan-2,4-dion.

**2.3 Oxalsäurediamide**, z. B., 4,4'-Dioctyloxyoxanilid, 2,2'-Dioctyloxy-5,5'-di-tert.-butyloxanilid, 2,2'-Didodecyloxy-5,5'-di-tert.-butyloxanilid, 2-Äthoxy-2'-äthyloxanilid, N,N'-Bis-(3-dimethylaminopropyl)-oxalamid, 2-Äthoxy-5-tert.-butyl-2'-äthyloxanilid und deren Gemisch mit 2-Äthoxy-2'-äthyl-5,4'-di-tert.-butyloxanilid oder Gemische ortho- und para-methoxy- sowie o- und p-äthoxydisubstituierter Oxanilide.

**3. Metalldesaktivatoren**, z. B. Oxanilid, Isophthalsäuredihydrazid, Sebacinsäurebisphenylhydrazid, Bisbenzylidenoxalsäuredihydrazid, N,N'-Diacetaladipinsäuredihydrazid, N,N'-Bissalicyloyloxalsäuredihydrazid, N,N'-Bissalicyloylhydrazin, N,N'-Bis-(3,5-di-tert.-butyl-4-hydroxyphenylpropionyl)-hydrazin, N-Salicyloyl-N'-salicylalhydrazin, 3-Salicyloylamino-1,2,4-triazol oder N,N'-Bissalicyloylthiopropionsäuredihydrazid.

**4. Basische Costabilisierungsmittel**, z. B. Alkalimetallsalze und Erdalkalimetallsalze höherer Fettsäuren, zum Beispiel Ca-Stearat, Zn-Stearat, Mg-Behenat, Na-Ricinoleat oder K-Palmitat.

**5. Keimbildungsmittel**, z. B. 4-tert.-Butylbenzoesäure, Adipinsäure oder Diphenylessigsäure.

**6. Phosphite und Phosphonite**, wie zum Beispiel Triphenylphosphit, Diphenylalkylphosphite, Phenyldialkylphosphite, Tri-(nonylphenyl)-phosphit, Trilaurylphosphit, Trioctadecylphosphit und 3,9-Isodecyloxy-2,4,8,10-tetraoxa-3,9-diphospha[5.5]undecan und Tetra-(2,4-di-tert.-butylphenyl)-diphenylen-4,4'-bis-(phosphonit).

Weitere Zusatzmittel, die in die stabilisierten Zusammensetzungen eingebaut werden können, sind Thiosynergisten wie Thiodipropionsäuredilaurylester, Gleitmittel wie Stearylalkohol, Füllstoffe, Asbest, Kaolin, Talkum, Glasfasern, Pigmente, Aufhellungsmittel, Flammschutzmittel und Antistatika.

Gegenstand dieser Erfindung ist weiterhin eine gegen Abbau stabilisierte Zusammensetzung, bestehend aus

(a) einem oder mehreren gesättigten Polyolefinen,
(b) einer stabilisierenden Menge eines oder mehrerer aus der Gruppe der Phenolalterungsschutzmittel, der Lichtstabilisatoren auf Basis sterisch gehinderter Amine, der Lichtstabilisatoren auf Basis alkylierter Hydroxybenzoate, Ultraviolett-Lichtschutzmittel, der organischen Phosphorverbindungen, der Fettsäurealkalimetallsalze und der Thiosynergisten ausgewählten Stabilisierungsmittel und
(c) einer stabilisierenden Menge eines oder mehrerer Hydroxylamine der Formel A.

Die vorliegende Zusammensetzung ist gegen Abbau und/oder Verfärbung durch Einwirkung erhöhter Erhitzungstemperaturen, Erdgasverbrennungsprodukten, gamma-Bestrahlung oder Lagerung bei Umgebungstemperatur über einen längeren Zeitraum stabilisiert.

Gegenstand der vorliegenden Erfindung ist insbesondere eine stabilisierte Zusammensetzung, in der als Komponente (b) eine stabilisierende Menge eines oder mehrerer Phenolalterungsschutzmittel in Verbindung mit einer stabilisierenden Menge eines oder mehrerer Fettsäurealkalimetallsalze eingesetzt wird.

Gegenstand der vorliegenden Erfindung ist weiterhin insbesondere eine stabilisierte Zusammensetzung, in der als Polyolefin der Komponente (a) ein Homo- oder Copolymer eines alpha-Olefins eingesetzt ist.

Als gesättigte Polyolefine zum Einsatz in den vorliegenden Zusammensetzungen kommen die von Monoolefinen wie Polyäthylen, das vernetzt sein kann, Polypropylen, Polyisobutylen, Polybuten-1, Poly-3-methylbuten-1 und Polymethylpenten-1 abgeleiteten Polymere in Betracht. Beim Polyäthylen kann es sich zum Beispiel um solches mittlerer Dichte, hoher Dichte oder linearem Polyäthylen niedriger Dichte handeln.

Gemische der oben angeführten Homopolymere, zum Beispiel Gemische aus Polypropylen und Polyäthylen, Polypropylen und Polybuten-1 oder Polypropylen und Polyisobutylen und ähnlichen, können auch verwendet werden.

Copolymere aus Monoolefinen können auch in den vorliegenden Zusammensetzungen Verwendung finden, zum Beispiel Äthylen/Propylen-Copolymere, Propylen/Buten-1-Copolymere, Propylen/Octen-1-Copolymere, Äthylen/Buten-1-Copolymere, Äthylen/Octen-1-Copolymere sowie Äthylen/Vinylacetat-Copolymere.

Als die Polyolefinkomponente finden in den vorliegenden Zusammensetzungen insbesondere Polyäthylen, Polypropylen, Polyisobutylen, Poly(buten-1), Poly(penten-1), Poly-(3-methylbuten-1), Poly(4-methylpenten-1) und verschiedene Äthylen- oder Propylencopolymere Verwendung.

Als besonders bevorzugte Polyolefinsubstrate seien Polypropylen, Polyäthylen niedriger Dichte, Polyäthylen mittlerer Dichte, Polyäthylen hoher Dichte, lineares Polyäthylen niedriger Dichte, Poly(buten-1), Äthylen/Vinylacetat-Copolymer, Äthylen/Propylen-Copolymer und Copolymere aus Äthylen oder aus Propylen mit anderen alpha-Olefinen erwähnt.

Als ganz besonders bevorzugtes Polyolefinsubstrat wird Polypropylen, Polyäthylen hoher Dichte, Äthylen/Propylen-Copolymer oder ein Copolymer aus Äthylen oder Propylen mit einem anderen alpha-Olefin eingesetzt.

Das Phenolalterungsschutzmittel im Vordergrund des Interesses wird aus der Gruppe 3,5-Di-tert.-butyl-4-hydroxyhydrozimtsäure-n-octadecylester, Neopentantetrayltetrakis-(3,5-di-tert.-butyl-4-hydroxyhydrocinnamat), 3,5-Di-tert.-butyl-4-hydroxybenzylphosphonsäure-di-n-octadecylester, 1,3,5-Tris-(3,5-di-tert.-butyl-4-hydroxybenzyl)-isocyanurat, Thiodiäthylenbis(3,5-di-tert.-butyl-4-hydroxyhydrocinnamat), 1,3,5-Trimethyl-2,4,6-tris(3,5-di-tert.-butyl-4-hydroxybenzyl)-benzol, 3,6-Dioxaoctamethylenbis(3-methyl-5-tert.-butyl-4-hydroxyhydrocinnamat), 2,6-Di-tert.-butyl-p-kresol, 2,2'-Äthylidenbis(4,6-di-tert.-butylphenol), 1,3,5-Tris(2,6-dimethyl-4-tert.-butyl-3-hydroxybenzyl)-isocyanurat, 1,1,3-Tris(2-methyl-4-hydroxy-5-tert.-butylphenyl)butan, 1,3,5-Tris[2-(3,5-di-tert.-butyl-4-hydroxyhydrocinnamoyloxy)äthyl]isocyanurat, 3,5-Di-(3,5-di-tert.-butyl-4-hydroxybenzyl)-2,4,6-trimethylphenol, Hexamethylenbis(3,5-di-tert.-butyl-4-hydroxyhydrocinnamat), 1-(3,5-Di-tert.-butyl-4-hydroxyanilino)-3,5-di(octyl-thio)-s-triazin, N,N'-Hexamethylenbis(3,5-di-tert.-butyl-4-hydroxyhydrocinnamamid), Calcium-bis(3,5-di-tert.-butyl-4-hydroxybenzylphosphonsäureäthylester), Äthylenbis-[3,3-di(3-tert.-butyl-4-hydroxyphenyl)butyrat], 3,5-Di-tert.-butyl-4-hydroxybenzylmercaptoessigsäureoctylester, Bis(3,5-tert.-butyl-4-hydroxyhydrocinnamoyl)hydrazid und N,N'-Bis-[2-(3,5-di-tert.-butyl-4-hydroxyhydrocinnamoyloxy)äthyl]-oxamid, ausgewählt.

Eine ganz besonders bevorzugte Ausführungsform enthält als Phenolalterungsschutzmittel Neopentantetrayltetrakis(3,5-di-tert.-butyl-4-hydroxyhydrocinnamat), 3,5-Di-tert.-butyl-4-hydroxyhydrozimtsäure-n-octadecylester, 1,3,5-Trimethyl-2,4,6-tris(3,5-di-tert.-butyl-4-hydroxybenzyl)benzol, 1,3,5-Tris(3,5-di-tert.-butyl-4-hydroxybenzyl)isocyanurat, 2,6-Di-tert.-butyl-p-kresol oder 2,2'-Äthylidenbis(4,6-di-tert.-butylphenol).

Als alkalisches Metallsalz einer Fettsäure enthalten die vorliegenden Zusammensetzungen solche Salze wie die Alkalimetall-, Erdalkalimetall-, Zink-, Cadmium- oder Aluminiumsalze höherer Fettsäuren, zum Beispiel Calciumstearat, Zinkstearat, Magnesiumbehenat, Natriumricinoleat oder Kaliumpalmitat. Calciumstearat ist besonders bevorzugt.

Als organische Phosphorverbindung enthalten die vorliegenden Zusammensetzungen solche Verbindungen wie zum Beispiel Triphenylphosphit, Diphenylalkylphosphite, Phenyldialkylphosphite, Tri-(nonylphenyl)-phosphit, Trilaurylphosphit, Trioctadecylphosphit, Di(isodecyloxy)-2,4,8,10-tetra-oxa-3,9-diphospha[5.5]undecan und Tri-(4-hydroxy-3,5-di-tert.-butylphenyl)-phosphit oder ähnliche Phosphonite.

Die organische Phosphorverbindung im Vordergrund des Interesses wird aus der Gruppe Tris(2,4-di-tert.-butylphenyl)phosphit, 3,9-Di(2,4-di-tert.-butylphenoxy)-2,4,8,10-tetraoxa-3,9-diphospha[5.5]undecan, Tris(p-nonylphenyl)phosphit, 3,9-Distearyloxy-2,4,8,10-tetraoxa-3,9-diphospha[5.5]-undecan, Dilaurylphosphit, 3,9-Di[2,6-di-tert.-butyl-4-(2-(n-octadecyloxycarbonyl)-äthyl)phenoxy]-2,4,8,10-tetraoxa-3,9-diphospha[5.5]undecan und Tetrakis(2,4-di-tert.-butylphenyl)-4,4'-bis(diphenylen)phosphonit ausgewählt. Tris-(2,4-di-tert.-butylphenyl)phosphit ist besonders bevorzugt.

Als Thiosynergisten können die vorliegenden Zusammensetzungen solche Thiosynergisten wie zum Beispiel Dilaurylthiodipropionat, Distearylthiodipropionat oder Neopentantetrayltetrakis(3-dodecylthiopropionat) enthalten. Distearylthiodipropionat oder Dilaurylthiodipropionat ist besonders bevorzugt.

Als Lichtstabilisator auf Basis sterisch gehinderter Amine können die vorliegenden Zusammensetzungen zum Beispiel solche gehinderten Amine wie 4-Benzoyl-2,2,6,6-tetramethylpiperidin, 4-Stearyloxy-2,2,6,6-tetramethylpiperidin, Sebacinsäurebis-(2,2,6,6-tetramethylpiperidyl)-ester oder 3-n-Octyl-7,7,9,9-tetramethyl-1,3,8-triazaspiro[4.5]decan-2,4-dion enthalten.

Der Lichtstabilisator auf Basis sterisch gehinderter Amine im Vordergrund des Interesses wird aus der Gruppe Sebacinsäurebis(2,2,6,6-tetramethylpiperidin-4-yl)-ester, Sebacinsäurebis(1,2,2,6,6-pentamethylpiperidin-4-yl)ester, (3,5-Di-tert.-butyl-4-hydroxybenzyl)-butylmalonsäure-di(1,2,2,6,6-pentamethylpiperidn-4-yl)ester, Tris-(2,2,6,6-tetramethylpiperidin-4-yl)nitriltriacetat, 1,2-Bis-(2,2,6,6-tetramethyl-3-oxopiperazin-4-yl)äthan, 2,2,4,4-Tetramethyl-7-oxa-3,20-diaza-21-oxodispiro[5.1.11.2]heneicosan, Polykondensationsprodukt aus 2,4-Dichlor-6-tert.-octylamino-s-triazin und 4,4'-Hexamethylen-bis(amino-2,2,6,6-tetramethylpiperidin), Polykondensationsprodukt aus 1-(2-Hydroxyäthyl)-2,2,6,6-tetramethyl-4-hydroxypiperidin und Bernsteinsäure, Polykondensationsprodukt aus 4,4'-Hexamethylenbis(amino-2,2,6,6-tetramethylpiperidin) und 1,2-Dibromäthan, Polykondensationsprodukt aus 2,4-Dichlor-6-morpholino-s-triazin und 4,4'-Hexamethylenbis(amino-2,2,6,6-tetramethylpiperidin), N,N',N",N'"-Tetrakis[(4,6-bis(butyl-(2,2,6,6-tetramethylpiperidin-4-yl)amino)-s-triazin-2-yl)]-1,10-diamino-4,7-diazadecan, Octamethylenbis(2,2,6,6-tetramethylpiperidin-4-carboxylat) und 4,4'-Äthylenbis(2,2,6,6-tetramethylpiperazin-3-on), ausgewählt.

Eine ganz besonders bevorzugte Ausführungsform enthält als den Lichtstabilisator auf Basis sterisch gehinderter Amine Sebacinsäurebis(2,2,6,6-tetramethylpiperidin-4-yl)ester, das Polykondensationsprodukt aus 1-(2-Hydroxyäthyl)-2,2,6,6-tetramethyl-4-hydroxypiperidin und Bernsteinsäure, das Polykondensationsprodukt aus 2,4-Dichlor-6-tert.-octylamino-s-triazin und 4,4'-Hexamethylenbis(amino-2,2,6,6-tetramethylpiperidin) oder N,N',N",N'"-Tetrakis-[(4,6-bis(butyl-(2,2,6,6-tetramethylpiperidin-4-yl)amino)s-triazin-2-yl]-1,10-diamino-4,7-diazadecan.

Als Ultraviolett-Lichtschutzmittel können die vorliegenden Zusammensetzungen solche Lichtschutzmittel wie 2H-Benztriazole, die Benzophenone, die Oxanilide, die alphaCyancinnamate der substituierten Benzoesäureester oder die Nickelsalze der o-alkyl-gehinderten Phenolbenzylphosphonate enthalten.

Es folgen Beispiele solcher Ultraviolett-Lichtschutzmittel.

**UV-Lichtschutzmittel**

**2-(2'-Hydroxyphenyl)-benztriazole**, z. B. das 5'-Methyl-, 3',5'-Di-tert.-butyl-, 5'-tert.-Butyl-, 5'-(1,1,3,3-Tetramethylbutyl)-, 5-Chlor-3',5'-di-tert.-butyl-, 5-Chlor-3'-tert.-butyl-5'-methyl-, 3'-sek.-Butyl-5'-tert.-butyl-, 3'-α-Methylbenzyl-5'-methyl-, 3'-α-Methylbenzyl-5'-methyl-5-chlor-, 4'-Hydroxy-, 4'-Methoxy-, 4'-Octoxy-, 3',5'-Di-tert.-amyl-, 3'-Methyl-5'-carbomethoxyäthyl- und 5-Chlor-3',5'-di-tert.-amylderivat.

**2,4-Bis-(2'-hydroxyphenyl)-6-alkyl-s-triazine**, z. B. das 6-Äthyl-, 6-Heptadecyl- oder 6-Undecylderivat.

**2-Hydroxybenzophenone**, z. B. das 4-Hydroxy-, 4-Methoxy-, 4-Octoxy-, 4-Decyloxy-, 4-Dodecyloxy-, 4-Benzyloxy-, 4,2',4'-Trihydroxy-, 2,2',4,4'-Tetrahydroxy- oder 2'-Hydroxy-4,4'-dimethoxyderivat.

**1,3-Bis-(2'-hydroxybenzoyl)-benzole**, z. B. 1,3-Bis-(2'-hydroxy-4'-hexyloxybenzoyl)-benzol, 1,3-Bis-(2'-hydroxy-4'-octyloxybenzoyl)-benzol oder 1,3-Bis-(2'-hydroxy-4'-dodecyloxybenzoyl)-benzol.

**Ester gegebenenfalls substituierter Benzoesäuren**, z. B. Phenylsalicylat, Octylphenylsalicylat, Dibenzoylresorcin, Bis-(4-tert.-butylbenzoyl)-resorcin, Benzoylresorcin, 3,5-Di-tert.-butyl-4-hydroxybenzoesäure-2,4-di-tert.-butylphenylester oder -octadecylester oder -2-methyl-4,6-di-tert.-butylester.

**Acrylate**, z. B. α-Cyan-β,β-diphenylacrylsäureäthylester oder -isooctylester, α-Carbomethoxyzimtsäuremethylester, α-Cyan-β-methyl-p-methoxyzimtsäuremethylester oder -butylester oder N(β-Carbomethoxyvinyl)-2-methylindolin.

**Oxalsäurediamide**, z. B. 4,4'-Di-octyloxyoxanilid, 2,2'-Di-octyloxy-5,5'-di-tert.-butyloxanilid, 2,2'-Di-dodecyloxy-5,5'-di-tert.-butyloxanilid, 2-Äthoxy-2'-äthyloxanilid, N,N'-Bis-(3-dimethylaminopropyl)-oxalamid, 2-Äthoxy-5-tert.-butyl-2'-äthyloxanilid und deren Gemisch mit 2-Äthoxy-2'-äthyl-5,4'-di-tert.-butyloxanilid oder Gemische aus ortho- und para-Methoxy- sowie aus o- und p-äthoxydisubstituierten Oxaniliden.

Bevorzugt wird als Ultraviolett-Lichtschutzmittel in den vorliegenden Zusammensetzungen 2-(2-Hydroxy-5-methylphenyl)-2H-benztriazol, 2-(2-Hydroxy-3,5-di-tert.-amylphenyl)-2H-benztriazol, 2-[2-Hydroxy-3,5-di-(alpha,alpha-di-methylbenzyl)phenyl]-2H-benztriazol, 2-(2-Hydroxy-5-tert.-octylphenyl)-2H-benztriazol, 2-Hydroxy-4-octyloxybenzophenon, Nickel-bis(O-äthyl-3,5-di-tert.-butyl-4-hydroxybenzylphosphonat), 2,4-Dihydroxybenzophenon, 2-(2-Hydroxy-3-tert.-butyl-5-methylphenyl)-2H-benztriazol, Nickel-Butylamin-komplex mit 2,2'-Thiobis(4-tert.-butylphenol), 2-Äthoxy-2'-äthyloxanilid oder 2-Äthoxy-2'-äthyl-5,5'-di-tert.-butyloxanilid eingesetzt.

Allgemein bewegt sich die Einsatzmenge der Hydroxylaminstabilisierungsmittel gemäß der Erfindung zwischen etwa 0,01 bis etwa 5 Gew.-%, bezogen auf die stabilisierte Zusammensetzung, je nach Substrat und Anwendungszweck. Ein vorteilhafter Einsatzmengenbereich erstreckt sich von etwa 0,025 bis etwa 2 %, insbesondere von 0,05 bis etwa 1 %.

Mittels der erfindungsgemässen Hydroxylaminverbindungen werden Polyolefine insbesondere während Verarbeitung bei Hochtemperaturen mit relativ geringem Farbumschlag stabilisiert, auch wenn das Polymer mehrere Extrusionen durchläuft.

Die erfindungsgemässen Stabilisierungsmittel können zwar zweckmäßigerweise auf übliche Art und Weise in die Polyolefine vor deren Verarbeitung zu Formteilen eingearbeitet werden, es ist jedoch auch möglich, die vorliegenden Stabilisierungsmittel durch Oberflächenauftrag auf die fertigen Formteile aufzutragen. Diese Möglichkeit ist besonders wertvoll bei Faseranwendungen, wobei die vorliegenden Stabilisierungsmittel oberflächlich auf die Fasern zum Beispiel über Präparationsmittel beim Schmelzenspinnverfahren aufgetragen werden.

Die nachfolgenden Beispiele sollen die vorliegende Erfindung ohne Beschränkung darauf erläutern.

**Beispiel 1**

**N,NBis[(3,5-di-tert.-butyl-4-hydroxyphenyl)thiomethyl]-hydroxylamin**

Eine Suspension von 3,47 g Hydroxylaminhydrochlorid in 20 ml Methanol wird bei 0°C unter Rühren mit einer Lösung von 3,07 g Kaliumhydroxyd in 50 ml Methanol versetzt.

Anschließend wird wäßrige Formaldehydlösung (37 %, 8,2 ml) und danach eine Lösung von 23,84 g 3,5-Di-tert.-butyl-4-hydroxythiophenol in 100 ml Methanol zugesetzt. Das Reaktionsgemisch wird 8 Stunden lang bei Umgebungstemperatur gerührt und dann mit 75 ml Wasser versetzt. Das Niederschlagsprodukt wird abfiltriert und aus Heptan umkristallisiert. Man erhält 19,5 g eines weißen Feststoffes mit Schmelzpunkt 135 - 138°C.

Analyse:
Berechnet für $C_{30}H_{47}NO_3S_2$: C, 67,5 ; H, 8,9 ; N, 2,6.
Gefunden: C, 67,7 ; H, 8,8 ; N, 2,5.

**Beispiel 2**

**N,N-Bis[(3,5-di-tert.-butyl-4-hydroxybenzyl)thiomethyl]-hydroxylamin**

Das Verfahren gemäß Beispiel 1 wird wiederholt mit 3,47 g Hydroxylaminhydrochlorid, 3,09 g Kaliumhydroxyd, 8,20 ml 37 %-igem wäßrigem Formaldehyd und 26,84 g 3,5-Di-tert.-butyl-4-hydroxybenzylmercaptan. Das Reaktionsprodukt wird aus Isopropanol umkristallisiert, und man erhält 19,96 g eines weißen Feststoffes mit Schmelzpunkt 98 - 101°C.

Analyse:
Berechnet für $C_{32}H_{51}NO_3S_2$: C, 68,4 ; H, 9,1 ; N, 2,5.
Gefunden: C, 68,1 ; H, 9,4 ; N, 2,6.

**Beispiel 3**

**N,N-Bis[(3-methyl-5-tert.-butyl-4-hydroxyphenyl)thiomethyl]-hydroxylamin**

Das Verfahren gemäß Beispiel 1 wird wiederholt mit 3,47 g Hydroxylaminhydrochlorid, 3,09 g Kaliumhydroxyd, 8,20 ml 37 %-igem wäßrigem Formaldehyd und 19,63 g 3-Methyl-5-tert.-butyl-4-hydroxythiophenol. Das Reaktionsprodukt wird aus Äthylacetat/Heptan umkristallisiert, und man erhält 3,47 g eines weißen Feststoffs mit Schmelzpunkt 115 - 118°C.

Analyse:
Berechnet für $C_{24}H_{35}NO_3S_2$: C, 64,1 ; H, 7,9 ; N, 3,1.
Gefunden: C, 64,0 ; H, 7,7 ; N, 3,1.

**Beispiel 4**

**N,N-Bis[n-dodecylthiometbyl]hydroxylamin**

Das Verfahren gemäß Beispiel 1 wird wiederholt mit 3,50 g Hydroxylaminhydrochlorid, 3,10 g Kaliumhydroxyd, 8,20 ml 37 %-igem wäßrigem Formaldehyd und 24,0 ml n-Dodecylmercaptan. Das Reaktionsprodukt wird aus Heptan umkristallisiert, und man erhält 19,8 g eines weißen Feststoffs mit Schmelzpunkt 63 - 65°C.

Analyse:
Berechnet für $C_{26}H_{55}NOS_2$: C, 67,6 ; H, 12,0 ; N, 3,0.
Gefunden: C, 67,7 ; H, 12,3 ; N, 3,2.

**Beispiel 5**

**N,N-Bis(n-octadecylthiomethyl)hydroxylamin**

Die Herstellung der obengenannten Verbindung erfolgt nach der allgemeinen Vorschrift gemäß Beispiel 4, nur daß anstelle von n-Dodecylmercaptan eine äquivalente Menge an n-Octadecylmercaptan verwendet wird.

**Beispiel 6**

**N,N-Bis(tridecylthiomethyl)hydroxylamin**

Die Herstellung der obengenannten Verbindung erfolgt nach der allgemeinen Vorschrift gemäß Beispiel 4, nur daß anstelle von n-Dodecylmercaptan eine äquivalente Menge an Tridecylmercaptan verwendet wird.

Analyse:
Berechnet für $C_{28}H_{59}NOS_2$: C, 68,9 ; H, 12,1 ; N, 2,9.
Gefunden: C, 68,6 ; H, 11,9 ; N, 2,7.

**Beispiel 7**

**N,N-Bis[1-(n-dodecylthio)butyl]hydroxylamin**

Die Herstellung der obengenannten Verbindung erfolgt nach der allgemeinen Vorschrift gemäß Beispiel 4, nur daß anstelle von Formaldehyd eine äquivalente Menge an n-Butyraldehyd verwendet wird.

**Beispiel 8**

**Verarbeitungsstabilität von Polypropylen bei 260°C**

Die Grundformulierung besteht aus 100 Teilen nichtstabilisiertem Polypropylen (Profax®) 6501, von Himont) mit 0,10 Teilen Calciumstearat. Die zu prüfenden Stabilisierungsmittel werden in das Polypropylen aus Lösungen in Methylenchlorid als Lösungsmittel eingemischt. Nach Entfernung des Lösungsmittels durch Verdampfung im Vakuum wird die stabilisierte Harzformulierung bei 100 U.p.M. aus einem Extruder mit einem Durchmesser von 2,54 cm unter folgenden Extruderverhältnissen extrudiert:

| Extruder Meßstelle | | Temperatur °C |
|---|---|---|
| Zylinder | Nr.1 | 232 |
| Zylinder | Nr.2 | 246 |
| Zylinder | Nr.3 | 260 |
| Anguß | Nr.1 | 260 |
| Anguß | Nr.2 | 260 |
| Anguß | Nr.3 | 260 |

Jeweils nach der ersten, dritten und fünften Extrusion wird Harzgranulat bei 193°C durch Formpressen zu 3,2 mm dicken Platten verarbeitet, und die Prüfteilvergilbungszahl nach ASTM D1925 bestimmt. Je geringer die Vergilbungszahl, desto geringer die Vergilbung.

Die Ergebnisse sind in Tabelle I zusammengestellt.

Aus Tabelle ist ersichtlich, daß die Gegenwart des Bis(substituiertes Thioalkyl)hydroxylamins in der ein Phenolalterungsschutzmittel enthaltenden Polypropylenzusammensetzung die mit der Gegenwart des Phenolalterungsschutzmittels verbundene Verfärbung weitgehend unterdrückt.

**TABELLE I**

**Verarbeitungsstabilität von Polypropylen bei 260°C**

| Stabilisierungsmittel* | Stabilisierungsmittelkonzentration Gew.-% | Vergilbungszahl Farbe nach Extrusion 1 | 3 | 3 |
|---|---|---|---|---|
| Grundformulierung | - | 2,1 | 4,2 | 6,4 |
| Alterungsschutzmittel A | 0,1 | 6,0 | 10,6 | 14,4 |
| *Alterungsschutzmittel A plus* | 0,1 | | | |
| Verbindung aus Beispiel 2 | 0,05 | 5,0 | 6,2 | 7,5 |
| Verbindung aus Beispiel 3 | 0,05 | 6,7 | 8,4 | 9,2 |
| Verbindung aus Beispiel 4 | 0,05 | 5,4 | 7,3 | 8,5 |

*Alterungsschutzmittel A = Neopentantetrayltetrakis(3,5-ditert.-butyl-4-hydroxyhydrocinnamat)

**Beispiel 9**

Nicht-stabilisiertes Polypropylen (Profax® 6501 von Himont) mit 0,1 Teilen Calciumstearat wird gründlich mit 0,1 Gew.-% Neopentantetrayltetrakis(3,5-di-tert.-butyl-4-hydroxyhydrocinnamat) gemischt. Auch Proben aus Polypropylen mit demselben Phenolalterungsschutzmittel (0,1 Gew.-%) und 0,3 Gew.-% der Verbindung aus Beispiel 3 werden hergestellt. Nach Durchmischung wird bei 182°C auf einer Zweiwalzenmühle über 10 Minuten gemahlen, wonach man das stabilisierte Polypropylen als Fell aus der Mühle herausnimmt und abkühlen läßt.

Die gelierten Polypropylenfälle werden anschliessend in Stücke zerschnitten und auf der hydraulischen Presse bei 218°C und 14,96 bar Druck über 7 Minuten verpresst. Die so hergestellten Platten der Dicke 0,635 mm werden der Schnellalterungsprüfung bei 150°C in einem Ofen mit künstlichem Saugzug unterzogen. Sobald die Platten die ersten Anzeichen des Abbaus zeigen (z. B. Rissbildung oder verbraunte Kanten), werden sie als Versager eingestuft. Die Ergebnisse sind aus nachfolgender Tabelle ersichtlich.

**Alterungsprüfung an Polypropylenplatten im Ofen**

| **% Stabilisierungsmittel** | **Stundenzahl bis zum Versagen** |
|---|---|
| abwesend | 3 |
| 0,1 % Phenolalterungsschutzmittel* | 600 |
| 0,1 % Phenolalterungsschutzmittel plus 0,3 % Verbindung aus Beispiel 3 | 900 |

* vorstehend genannt

Die vorliegende Verbindung aus Beispiel 3 wirkt als Thiosynergist gegenüber dem Phenolalterungsschutzmittel bei der Stabilisierung von Polypropylen.

**Beispiel 10**

**Verzögerung der Oxydation von Turbinenöl auf Erdölbasis**

Diese Prüfung erfolgt nach ASTM-Verfahren D 943 - 81.

300 ml 150 N Paraffinmineralöl, das 0,25 Gew.-% der zu prüfenden Verbindung enthält, und 60 ml destilliertes Wasser werden in einem großen Glasrohr vorgelegt und mit einem Ölbad von 950C erhitzt. Man läßt Sauerstoff in einer Menge von 3 Litern pro Stunde durch das Einlassröhrchen und durch das Öl-Wassergemisch perlen. Eisen-Kupfer-katalysatorschlangen sind in dem Sauerstoffeinlaßröhrchen angebracht. Ölproben werden regelmäßig entnommen und deren Säurezahl bestimmt. Das zu prüfende Öl wird bei Erreichung einer Säurezahl von 2,0 als versagt eingestuft. Die Prüfergebnisse sind nachfolgend angegeben.

| **Prüfverbindung aus Beispiel** | **Zeit Stunden** | **Säure-zahl** |
|---|---|---|
| Grundöl (ohne Stabilisierungsmittel) | < 30 | 2,0 |
| 4 | 270 | 2,0 |

Die vorliegende Verbindung aus Beispiel 4 stabilisiert das Öl weit über die Oxydationszeit des Grundöls hinaus.

**Beispiel 11**

Beim Einbau einer wirksamen Menge an Verbindung aus Erfindungsbeispielen 1, 2, 3 oder 4 in einem Substrat aus der Gruppe ABS-Harze, schlagfestes Polystyrol, Polybutadien, Polyisopren, Naturkautschuk, Poly(phenylenoxyd), Kohlenwasserstoffschmieröle und synthetische Öle wird das Substrat im Vergleich zu nicht-stabilisiertem Substrat gegen Abbau stabilisiert.

**Patentansprüche:**

1. Verbindung der Formel I

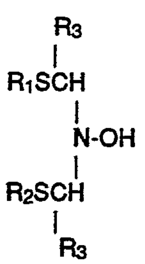

(I)

worin $R_1$ und $R_2$ unabhängig voneinander jeweils Alkyl mit 8 bis 18 Kohlenstoffatomen oder jeweils eine Gruppe

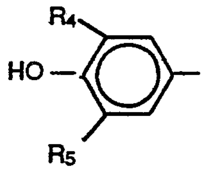 oder 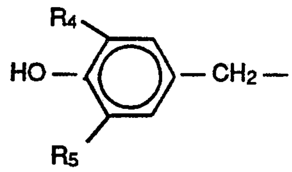

$R_4$ und $R_5$ unabhängig voneinander Alkyl mit 1 bis 18 Kohlenstoffatomen, Cycloalkyl mit 5 bis 6 Kohlenstoffatomen, Phenyl, Alkaryl mit 7 bis 18 Kohlenstoffatomen oder Aralkyl mit 7 bis 9 Kohlenstoffatomen, und $R_3$ Wasserstoff oder Alkyl mit 1 bis 12 Kohlenstoffatomen bedeuten.

2. Verbindung nach Anspruch 1 worin $R_1$ und $R_2$ jeweils die gleiche Bedeutung haben und $R_3$ für Wasserstoff steht.

3. Verbindung nach Anspruch 1 worin $R_4$ und $R_5$ jeweils die gleiche Bedeutung haben und für verzweigtkettiges Alkyl mit 4 bis 8 Kohlenstoffatomen stehen.

4. Verfahren nach Anspruch 3, worin $R_4$ und $R_5$ jeweils tert.-Butyl bedeuten.

5. Verbindung nach Anspruch 1 worin $R_1$ und $R_2$ jeweils die gleiche Bedeutung haben und für Alkyl mit 12 bis 18 Kohlenstoffatomen stehen und $R_3$ Wasserstoff oder Alkyl mit 1 bis 4 Kohlenstoffatomen bedeutet.

6. Verbindung nach Anspruch 5, worin $R_1$ und $R_2$ jeweils die gleiche Bedeutung haben und für n-Dodecyl, n-Tridecyl oder n-Octadecyl stehen, und $R_3$ Wasserstoff bedeutet.

7. Verbindung nach Anspruch 5, worin $R_3$ für n-Propyl steht.

8. Gegen Abbau stabilisierte Zusammensetzung, bestehend aus

(a) einem dem oxydativen, hitze- oder lichtbedingten Abbau unterliegenden Material,
(b) einer stabilisierenden Menge einer Verbindung der Formel A

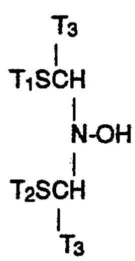 (A)

worin $T_1$ und $T_2$ unabhängig voneinander Alkyl mit 1 bis 18 Kohlenstoffatomen, Cycloalkyl mit 5 bis 6 Kohlenstoffatomen, Phenyl, Alkaryl mit 7 bis 18 Kohlenstoffatomen, Aralkyl mit 7 bis 9 Kohlenstoffatomen oder

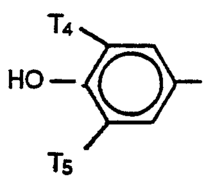 oder 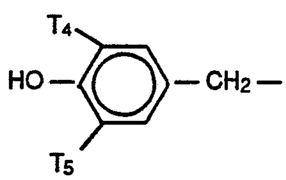

bedeuten, in denen $T_4$ und $T_5$ unabhängig voneinander Alkyl mit 1 bis 12 Kohlenstoffatomen, Cycloalkyl mit 5 bis 6 Kohlenstoffatomen, Phenyl, Alkaryl mit 7 bis 18 Kohlenstoffatomen oder Aralkyl mit 7 bis 9 Kohlenstoffatomen bedeuten; oder $T_1$ und $T_2$ bilden zusammen Alkylen mit 2 bis 3 Kohlenstoffatomen; und $T_3$ steht für Wasserstoff oder Alkyl mit 1 bis 12 Kohlenstoffatomen.

9. Zusammensetzung nach Anspruch 8, worin das Material der Komponente (a) aus der Gruppe Acrylnitril-Butadien-Styrol(ABS)-Harze, schlagfestes Polystyrol, Poly(phenylenoxyd), Polybutadien, Polyisopren, Naturkautschuk und Schmieröle ausgewählt ist.

10. Zusammensetzung nach Anspruch 8, bestehend aus

(a) einem oder mehreren gesättigten Polyolefinen,
(b) einer stabilisierenden Menge eines oder mehrerer aus der Gruppe der Phenolalterungsschutzmittel, der Lichtstabilisatoren auf Basis sterisch gehinderter Amine, der Lichtstabilisatoren auf Basis alkylierter Hydroxybenzoate, Ultraviolett-Lichtschutzmittel, der organischen Phosphorverbindungen, der Fettsäurealkalimetallsalze und der Thiosynergisten ausgewählter Stabilisierungsmittel und
(c) einer stabilisierenden Menge eines oder mehrerer Hydroxylamine der Formel A.

11. Zusammensetzung nach Anspruch 10, worin es sich bei dem Polyolefin der Komponente (a) um ein Homo- oder Copolymer eines alpha-Olefins handelt.

12. Zusammensetzung nach Anspruch 11, worin das Polyolefin aus der Gruppe Polypropylen, Polyäthylen niedriger Dichte, Polyäthylen mittlerer Dichte, Polyäthylen hoher Dichte, lineares Polyäthylen niedriger Dichte, Poly(buten-1), Äthylen/Vinylacetat-Copolymer, Äthylen/Propylen-Copolymer und Copolymere aus Äthylen oder aus Propylen mit anderen alpha-Olefinen ausgewählt ist.

13. Zusammensetzungen nach Anspruch 12, worin es sich bei dem Polyolefin um Polypropylen, Polyäthylen hoher Dichte, Äthylen/Propylen-Copolymer oder um einen Copolymeren aus Äthylen oder aus Propylen mit einem anderen alpha-Olefin handelt.

14. Zusammensetzung nach Anspruch 8, worin die Komponente (c) ein Hydroxylaminderivat der Formel A, in der $T_1$ und $T_2$ jeweils die gleiche Bedeutung haben und $T_3$ für Wasserstoff steht, ist.

15. Zusammensetzung nach Anspruch 8, worin in der Komponente (c) $T_1$ und $T_2$ gleich sind und für Alkyl mit 12 bis 18 Kohlenstoffatomen oder

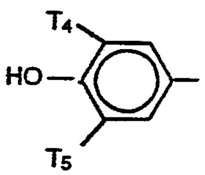 oder 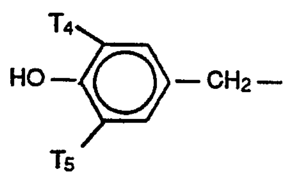

stehen, in denen $T_4$ und $T_5$ jeweils die gleiche Bedeutung haben und für verzweigtkettiges Alkyl mit 4 bis 8 Kohlenstoffatomen stehen.

16. Zusammensetzung nach Anspruch 15, worin $T_4$ und $T_5$ jeweils tert.-Butyl sind.

17. Zusammensetzung nach Anspruch 10, worin die Komponente (b) ein Phenolalterungsschutzmittel in Verbindung mit einem alkalischen Metallsalz einer Fettsäure ist.

18. Zusammensetzung nach Anspruch 10, worin es sich bei dem alkalischen Metallsalz um Calciumstearat, Zinkstearat, Magnesiumbehenat, Natriumricinoleat oder Kaliumpalmitat handelt.

**Claims**

1. A compound of formula I,

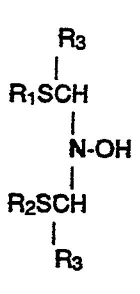 (I)

in which $R_1$ and $R_2$ independently of one another are each alkyl having 8 to 18 carbon atoms, or are each a group

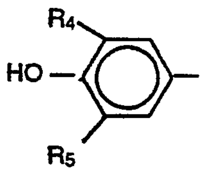 or 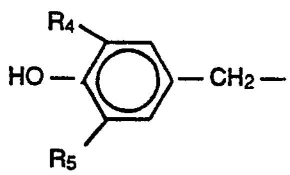

$R_4$ and $R_5$ independently of one another are alkyl having 1 to 18 carbon atoms, cycloalkyl having 5 to 6 carbon atoms, phenyl, alkaryl having 7 to 18 carbon atoms or aralkyl having 7 to 9 carbon atoms, and $R_3$ is hydrogen or alkyl having 1 to 12 carbon atoms.

2. A compound according to claim 1, in which $R_1$ and $R_2$ each have the same meaning; and $R_3$ is hydrogen.

3. A compound according to claim 1, in which $R_4$ and $R_5$ each have the same meaning and are branched-chain alkyl having 4 to 8 carbon atoms.

4. A compound according to claim 3, in which $R_4$ and $R_5$ are each tert-butyl.

5. A compound according to claim 1, in which $R_1$ and $R_2$ are each the same and are alkyl having 12 to 18 carbon atoms, and $R_3$ is hydrogen or alkyl having 1 to 4 carbon atoms.

6. A compound according to claim 5, in which $R_1$ and $R_2$ are each the same and are n-dodecyl, n-tridecyl or n-octadecyl, and $R_3$ is hydrogen.

7. A compound according to claim 5, in which $R_3$ is n-propyl.

8. A composition, stabilized against degradation, consisting of

(a) a material subject to oxidative, thermal or light-induced degradation, and
(b) a stabilizing amount of a compound of formula A

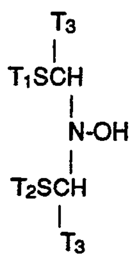 (A)

in which
$T_1$ and $T_2$ independently of one another are alkyl having 1 to 18 carbon atoms, cycloalkyl having 5 to 6 carbon atoms, phenyl, alkaryl having 7 to 18 carbon atoms, aralkyl having 7 to 9 carbon atoms or

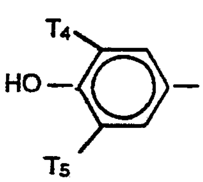 or 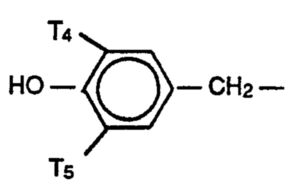

where $T_4$ and $T_5$ independently of one another are alkyl having 1 to 12 carbon atoms, cycloalkyl having 5 to 6 carbon atoms, phenyl, alkaryl having 7 to 18 carbon atoms or aralkyl having 7 to 9 carbon atoms; or $T_1$ and $T_2$ together form alkylene having 2 to 3 carbon atoms; and T3 is hydrogen or alkyl having 1 to 12 carbon atoms.

9. A composition according to claim 8, in which the material of component (a) is selected from the group comprising acrylonitrile-butadiene-styrene (ABS) resins, high-impact polystyrene, poly(phenylene oxide), polybutadiene, polyisoprene, natural rubber and lubricating oils.

10. A composition according to claim 8, consisting of

(a) one or more saturated polyolefins,
(b) a stabilizing amount of one or more stabilizers selected from the group comprising phenolic anti-ageing agents, light stabilizers based on hindered amines, light stabilizers based on alkylated hydroxybenzoates, ultraviolet light screens, organophosphorus compounds, alkaline metal salts of fatty acids, and thiosynergists, and
(c) a stabilizing amount of one or more hydroxylamines of formula A.

11. A composition according to claim 10, in which the polyolefin component (a) is a homopolymer or copolymer of an alpha-olefin.

12. A composition according to claim 11, in which the polyolefin is selected from the group comprising polypropylene, low-density polyethylene, medium-density polyethylene, high-density polyethylene, linear low-density polyethylene, poly(1-butene), ethylene/vinyl acetate copolymer, ethylene/propylene copolymer, and copolymers of ethylene or of propylene with other alpha-olefins.

13. A composition according to claim 12, in which the polyolefin is polypropylene, high-density polyethylene, ethylene/propylene copolymer or a copolymer of ethylene or of propylene with another alpha-olefin.

14. A composition according to claim 8, in which component (c) is a hydroxylamine derivative of formula A where $T_1$ are each the same and $T_3$ is hydrogen.

15. A composition according to claim 8, in which in component (c) $T_1$ and $T_2$ are the same and are alkyl having 12 to 18 carbon atoms or

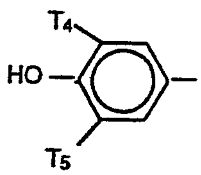 or 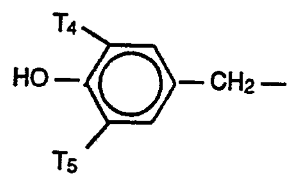

where $T_4$ and $T_5$ each have the same meaning and are branched-chain alkyl having 4 to 8 carbon atoms.

16. A composition according to claim 15, in which $T_4$ and $T_5$ are each tert-butyl.

17. A composition according to claim 10, in which component (b) is a phenolic anti-ageing agent in combination with an alkaline metal salt of a fatty acid.

18. A composition according to claim 10, in which the alkaline metal salt is calcium stearate, zinc stearate, magnesium behenate, sodium ricinoleate or potassium palmitate.

**Revendications**

1. Composé répondant à la formule I:

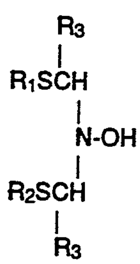 (I)

dans laquelle:

$R_1$ et $R_2$ représentent chacun, indépendamment l'un de l'autre, un alkyle contenant de 8 à 18 atomes de carbone, ou un radical de formule:

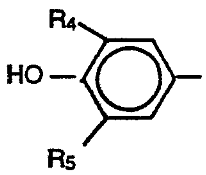 ou 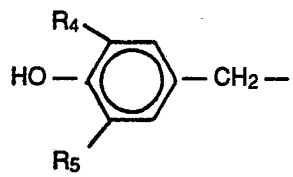

$R_4$ et $R_5$ représentent chacun, indépendamment l'un de l'autre, un alkyle contenant de 1 à 18 atomes de carbone, un cycloalkyle contenant 5 ou 6 atomes de carbone, un phényle, un alkylaryle contenant de 7 à 18 atomes de carbone ou un aralkyle contenant de 7 à 9 atomes de carbone, et
$R_3$ représente l'hydrogène ou un alkyle contenant de 1 à 12 atomes de carbone.

2. Composé selon la revendication 1 dans lequel $R_1$ et $R_2$ ont la même signification et $R_3$ représente l'hydrogène.

3. Composé selon la revendication 1 dans lequel $R_4$ et $R_5$ ont la même signification et représentent chacun un alkyle ramifié contenant de 4 à 8 atomes de carbone.

4. Composé selon la revendication 3 dans lequel $R_4$ et $R_5$ représentent chacun un radical tert-butyle.

5. Composé selon la revendication 1 dans lequel $R_1$ et $R_2$ ont la même signification et représentent chacun un alkyle contenant de 12 à 18 atomes de carbone, et $R_3$ représente l'hydrogène ou un alkyle contenant de 1 à 4 atomes de carbone.

6. Composé selon la revendication 5 dans lequel $R_1$ et $R_2$ ont les mêmes significations et représentent chacun un radical n-dodécyle, n-tridécyle ou n-octadécyle, et $R_3$ représente l'hydrogène.

7. Composé selon la revendication 5 dans lequel $R_3$ représente un radical n-propyle.

8. Composition stabilisée contre la dégradation, composition qui est constituée :

(a) d'une matière sensible à la dégradation causée par une oxydation, la chaleur ou la lumière, et
(b) d'une quantité suffisante, en ce qui concerne l'effet stabilisateur, d'un composé répondant à la formule A:

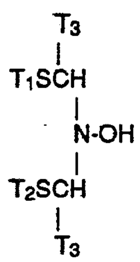 (A)

dans laquelle $T_1$ et $T_2$ représentent chacun, indépendamment l'un de l'autre, un alkyle contenant de 1 à 18 atomes de carbone, un cycloalkyle contenant 5 ou 6 atomes de carbone, un phényle, un alkylaryle contenant de 7 à 18 atomes de carbone, un aralkyle contenant de 7 à 9 atomes de carbone ou un radical répondant à l'une des formules:

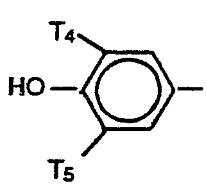 et 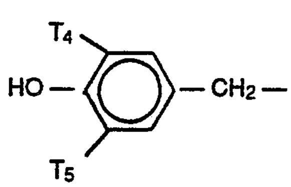

(dans lesquelles $T_4$ et $T_5$ représentent chacun, indépendamment l'un de l'autre, un alkyle contenant de 1 à 18 atomes de carbone, un cycloalkyle contenant 5 ou 6 atomes de carbone, un phényle, un alkylaryle contenant de 7 à 18 atomes de carbone ou un aralkyle contenant de 7 à 9 atomes de carbone), ou $T_1$ et $T_2$ forment ensemble un radical alkylène contenant 2 ou 3 atomes de carbone, et $T_3$ représente l'hydrogène ou un alkyle contenant de 1 à 12 atomes de carbone.

9. Composition selon la revendication 8 dans laquelle la matière de la composante (a) est prise dans l'ensemble constitué par les résines d'ABS (acrylonitrile/butadiène/styrène), le polystyrène de haute résilience, le poly-(oxy-phénylène), le polybutadiène, le polyisoprène, le caoutchouc naturel et des huiles lubrifiantes.

10. Composition selon la revendication 8 constituée:

(a) d'une ou plusieurs polyoléfines saturées,
(b) d'une quantité stabilisante d'un ou de plusieurs stabilisants pris dans l'ensemble constitué par les agents anti-vieillissements phénoliques, les stabilisants à la lumière à base d'amines à empêchement stérique, les stabilisants à la lumière à base d'hydroxy-benzoates alkylés, les agents de protection contre les rayons ultra-violets, les composés organiques du phosphore, les sels de métaux alcalins d'acides gras et les agents de synergie sulfurés, et
(c) d'une quantité stabilisante d'une ou de plusieurs hydroxylamines de formule A.

11. Composition selon la revendication 10 dans laquelle la polyoléfine de la composante (a) est un homopolymère ou un copolymère d'une α-oléfine.

12. Composition selon la revendication 11 dans laquelle la polyoléfine est prise dans l'ensemble constitué par le polypropylène, le polyéthylène de basse densité, le polyéthylène de densité moyenne, le polyéthylène de haute densité, le polyéthylène linéaire de basse densité, le poly-(butène-1), les copolymères éthylène/acétate de vinyle, les copolymères éthylène/propylène et les copolymères de l'éthylène ou du propylène avec d'autres α-oléfines.

13. Compositions selon la revendication 12 dans lesquelles la polyoléfine est le polypropylène, le polyéthylène de haute densité, un copolymère éthylène/propylène ou un copolymère de l'éthylène ou du propylène avec une autre α-oléfine.

14. Composition selon la revendication 8 dans laquelle la composante (c) est un dérivé de l'hydroxylamine de formule A dans lequel $T_1$ et $T_2$ ont la même signification et $T_3$ représente l'hydrogène.

15. Composition selon la revendication 8 dont, dans la composante (c), les symboles $T_1$ et $T_2$ ont la même signification et représentent chacun un alkyle contenant de 12 à 18 atomes de carbone ou un radical répondant à l'une des formules:

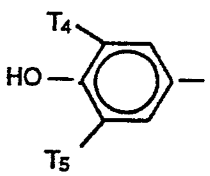

et

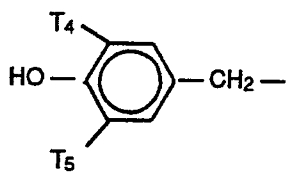

dans lesquelles $T_4$ et $T_5$ ont la même signification et représentent chacun un radical alkyle ramifié contenant de 4 à 8 atomes de carbone.

16. Composition selon la revendication 15 dans laquelle $T_4$ et $T_5$ représentent chacun un radical tert-butyle.

17. Composition selon la revendication 10 dans laquelle la composante (b) est un agent anti-vieillissement phénolique associé à un sel de métal alcalin d'un acide gras.

18. Composition selon la revendication 10 dans laquelle le sel de métal alcalin est le stéarate de calcium, le stéarate de zinc, le béhénate de magnésium, le ricinoléate de sodium ou le palmitate de potassium.